# EUROPEAN PATENT SPECIFICATION

(11) **EP 3 044 537 B1**
(45) Date of publication and mention of the grant of the patent: **24.10.2018**
(21) Application number: 14761662.7
(22) Date of filing: 10.09.2014
(51) Int. Cl.: G01B 11/24, G01M 11/02

(54) **CONTACT LENS INSPECTION SYSTEM AND METHOD**
KONTAKTLINSENPRÜFSYSTEM UND -VERFAHREN
SYSTÈME ET PROCÉDÉ D'INSPECTION DE LENTILLE DE CONTACT

(30) Priority: 11.09.2013 US 201361876559 P
(43) Date of publication of application: 20.07.2016
(73) Proprietor: Novartis AG, 4056 Basel (CH)
(72) Inventor: BIEL, Roger, 63743 Aschaffenburg (DE); FECHNER, Susanne, 63743 Aschaffenburg (DE); SCHWAB, Matthias, 63916 Amorbach (DE); KESSLER, Daniel, 63589 Lützelhausen (DE)
(74) Representative: Bohest AG
(86) International application number: PCT/EP2014/069291
(87) International publication number: WO 2015/036432

(56) References cited:
- WO-A1-2009/006361
- US-A- 5 641 437
- US-A- 5 936 704
- US-A1- 2004 061 828
- US-A1- 2007 273 828
- US-A1- 2010 259 719

## Description

### FIELD

The invention relates to a contact lens inspection system and method, in particular for the inspection of soft contact lenses as to whether or not they are inverted, preferably in an automated contact lens manufacturing line.

### BACKGROUND

Contact lenses from a wide range of materials are nowadays produced in great volumes in highly automated manufacturing lines. To ensure top quality of the manufactured contact lenses, the final contact lenses are optically inspected prior to packaging. Because contact lenses are intended for use on the eye, great care must be taken to make sure that the lenses meet strict quality standards.

Soft contact lenses may become inverted on their passage through different handling and treatment stations during the automated manufacturing, meaning that the rear face of the contact lens, which is normally concavely shaped to come into contact with the eye of the wearer, is protruding convexly outwardly while the front face of the contact lens is inverted to a concave shape. In principle, such an inverted contact lens still may provide the desired optical corrective power; however, the comfort to the wearer of such inverted contact lens is lowered. And while the wearer can generally determine whether or not a soft contact lens is inverted when taking the soft contact lens out of the package (for example, the soft contact lenses may comprise marks indicating to the wearer whether or not a soft contact lens is inverted), it is much more comfortable for the wearer to know that the soft contact lens taken out of the package already has the proper orientation (i.e. the soft contact lenses are not inverted). On the manufacturer's side this means that inverted soft contact lenses must be detected before packaging the soft contact lenses and must be re-inverted to have their proper orientation at the time they are packaged.

An inverted soft contact lens has a larger diameter, as it sits freely, than the same non-inverted soft contact lens. Accordingly, in general many inverted soft contact lenses may be detected by a relatively simple measurement of their actual diameter and by comparing the actually measured diameter with a predetermined standard diameter for the respective soft contact lens. However, certain deviations of the actual diameter from the predetermined standard diameter must be tolerated due to the automation of the lens manufacturing process. However, such tolerated deviations of the actual diameter from the predetermined standard diameter may lead in some instances to improper results in the detection of inverted contact lenses. For example, soft contact lenses which in their non-inverted state have a diameter which is at the lower limit of the tolerated diameters in their inverted state may have a diameter which is still within the tolerance range for non-inverted soft contact lenses. This could lead however, to an inverted soft contact lens being identified as being non-inverted and, consequently, such incorrectly identified "non-inverted" soft contact lens could be placed in a package.

Accordingly, there is a need for an even more accurate contact lens inspection system and method, in particular for soft contact lenses. A contact lens inspection system and method shall be provided, which is relatively simple, fully automatable, and provides accurate results, in particular with regard to the detection of inverted soft contact lenses. The contact lens inspection system and method shall be capable of being combined with and integrated into automated manufacturing lines for contact lenses.

US 2007/0273828 A1 discloses a system and a method for making measurement of a contact lens on the eye for the determination of the lens position and lens orientation, including lens inversion.

### SUMMARY

The present invention discloses a contact lens inspection system in accordance with claim 1, in particular for soft contact lenses, comprising:
a light source for illuminating a contact lens to be inspected, said light source being adapted to illuminate said contact lens with collimated light from a front side or the rear side of said contact lens;
a camera having an objective lens and an electronic sensor, said camera being arranged to produce an electronic orthographic image of said contact lens on said electronic sensor, wherein said objective lens has a diameter which is at least as large as a maximum diameter of said contact lens, and wherein said camera is arranged on that side of said contact lens opposite to said side where said light source is arranged;
an electronic scanning and evaluation unit adapted for electronically scanning at least one portion of said electronic orthographic image of said contact lens on said electronic sensor in sections of a predetermined size to detect within each of said sections of said electronic orthographic image of said contact lens a line structure, or a granular structure, and further adapted for counting a total number of detected line structures in said scanned at least one portion of said electronic orthographic image of said contact lens and for comparing said total number of detected line structures with a predetermined threshold value to determine whether or not said contact lens is inverted.

In some embodiments of the contact lens inspection system according to the invention, said objective lens comprises a telecentric lens.

In some embodiments of the contact lens inspection system according to the invention, said contact lens is arranged in a container with its front side or its rear side facing towards one end of said container, and aid light source is arranged on said one end of said container while said camera is arranged on another end of said container opposite to said one end of said container.

In some further embodiments of the contact lens inspection system according to the invention, said electronic scanning and evaluation unit is adapted for electronically scanning said at least one portion of said electronic orthographic image of said contact lens in one of horizontal or vertical scans, or in both horizontal and vertical scans, and wherein said sections are one of horizontal or vertical sections, or both horizontal and vertical sections.

In some specific embodiments of the contact lens inspection system according to the invention, each of said horizontal and vertical sections is of rectangular shape, and wherein said horizontal section has a size of five horizontal pixels and three vertical pixels of said electronic sensor, and wherein said vertical section has a size of three horizontal pixels and five vertical pixels of said electronic sensor.

In some embodiments of the contact lens inspection system according to the invention, said electronic scanning and evaluation unit is adapted for electronically scanning said at least one portion of said electronic orthographic image of said contact lens in radially directed scans, and wherein said sections are radially oriented sections.

In some specific embodiments of the contact lens inspection system according to the invention, each of said radially oriented sections is of rectangular shape and has a size of three circumferential pixels and five radial pixels of said electronic sensor.

A further aspect of the invention is directed to a method for inspecting a contact lens in accordance with claim 8, in particular a soft contact lens, said method comprising:
illuminating a contact lens to be inspected with collimated light from one of a front side or a rear side of said contact lens;
producing an electronic orthographic image of said illuminated contact lens on a side opposite to said side from which said contact lens is illuminated;
electronically scanning at least one portion said electronic orthographic image of said contact lens in sections of a predetermined size and detecting within each of said sections a line structure, or a granular structure;
counting a total number of detected line structures in said scanned at least one portion of said electronic orthographic image of said contact lens and comparing said counted total number of line structures with a predetermined threshold value to determine whether or not said contact lens is inverted.

In some embodiments of the method according to the invention, illuminating said contact lens with collimated light is performed using a light source which is arranged on one side of said front and rear sides of said contact lens, and producing said electronic orthographic image of said illuminated contact lens is performed using a camera arranged on said other side of said front side and said rear side of said contact lens, said camera having an objective lens and an electronic sensor, wherein said objective lens has a diameter which is at least as large as the maximum diameter of said contact lens.

In some further embodiments of the method according to the invention, an objective lens is used comprising a telecentric lens.

In still some further embodiments of the invention, electronically scanning said at least one portion of said electronic orthographic image of said contact lens in said sections is performed in one of horizontal or vertical scans, or is performed both in horizontal and vertical scans, and wherein said sections are one of horizontal sections or vertical sections or both, horizontal and vertical sections.

In some specific embodiments of the method according to the invention, each of said horizontal or vertical sections is of rectangular shape, and wherein said horizontal section has a size of five horizontal pixels and three vertical pixels of said electronic sensor, and wherein said vertical section has a size of three horizontal pixels and five vertical pixels of said electronic sensor.

In still some further embodiments of the method according to the invention, electronically scanning said electronic orthographic image of said contact lens in said sections is performed in a radial direction and wherein said sections are radially oriented sections.

In some specific embodiments of the method according to the invention each of said radially oriented sections is of rectangular shape and has a size of three circumferential pixels and five radial pixels of said electronic sensor.

The present invention makes use of the fact that the materials for the contact lenses, in particular soft contact lenses, comprise small amounts of coloring pigments giving the final contact lenses a slightly colored, for example bluish, appearance. This very decent coloring of the contact lens which is not noticed when the contact lens is worn on the eye assists the wearer in identifying the contact lens in the storage solution (e.g. saline) contained in the package and makes it easier to grab the lens for placing it on the fingertip and onto the eye. The coloring pigments are homogeneously distributed in the contact lens material. It has been found that an orthographic image of a soft contact lens can be used as an indicator of whether or not a soft contact lens is inverted. In the proper non-inverted state of the soft contact lens, an orthographic image of the soft contact lens shows a granular fine-structure of the pigments with a homogeneous distribution. When the soft contact lens is in the improper inverted state, the fine-structure of the pigments exhibits radially oriented linear structures.

Thus, by taking an orthographic image of the contact lens and by scanning the image for linear structures or granular structures, it can be determined whether or not the contact lens is inverted. The contact lens inspection system of the present invention is optimized for performing exactly this task, although it can also be used for normal inspection of contact lenses, including rigid contact lenses, for cosmetic defects. It allows for identification of inverted soft contact lenses even in situations when systems based on diameter measurements fail. The lens inspection system preferably is fully automated and can be easily be integrated into inspection stations of automated manufacturing lines in which contact lenses are inspected, for example, for accuracy in size, surface defects, tears, peripheral ruptures and inclusions such as bubbles or other inclusions, as well as small defects at the edges of the contact lenses.

While it is of course possible to scan the entire electronic orthographic image of said contact lens, it may be preferable to scan only a portion (for example a strip-shaped area of predetermined width) of the contact lens in order to determine whether or not the contact lens is inverted. This reduces the computing expense necessary for the determination of the state (inverted/non-inverted) of the contact lens and, as a consequence, the time interval needed for this determination is shorter, thereby increasing efficiency. On the other hand, the total number of occurrences of line structures in such portion is sufficient to reliably determine whether or not the contact lens is inverted. Also, more than one portion of the orthographic image of the contact lens can be scanned without the need to scan the entire orthographic image of the contact lens. Within each such scanned portion, the determination of the presence of a line structure (or a granular structure) is performed in sections of a predetermined size suitable for this determination. Such section can have different sizes and geometric orientation, as will be discussed in more detail below, and can be regarded as a window in which the respective determination of the presence of a line structure (or a granular structure) is performed.

A telecentric lens is a particularly suitable objective lens of a camera for producing an orthographic image and has its entrance pupil at infinity. Thus, irrespective of the position of the contact lens the image of the contact lens will have a constant magnification and produces an orthographic image of the contact lens. The electronic sensor onto which the orthographic image is produced to form an electronic orthographic image, may be a CCD-sensor, a CMOS-sensor, or any other suitable sensor.

The electronic scanning and evaluation unit may be adapted for electronically scanning the electronic orthographic image of said ophthalmic lens sectionwise in one of horizontal or vertical scans, or in both horizontal and vertical scans, and in horizontal or vertical sections, or both in horizontal and vertical sections. Each section is then evaluated as to the presence of a linear or granular structure. The scans may be performed sequentially (i.e. the electronic orthographic image or the at least one portion thereof is scanned sequentially in the individual sections, one section after another) or at the same time (i.e. the electronic orthographic image or the at least one portion thereof is scanned in all individual sections at the same time).

For example, each of the horizontal or vertical sections may be of rectangular shape. The horizontal section may have a size of five horizontal pixels and three vertical pixels of the CCD-sensor. The vertical section may have a size of three horizontal pixels and five vertical pixels of the CCD-sensor. For example, if in a vertical section it is detected that all or nearly all pixels of the second (the center) column are dark and the pixels of the neighboring columns, left and right of the center column all or nearly all are bright, this is interpreted as a line structure. If the total number of such line structures exceeds a predetermined threshold value, this is a clear indication that the inspected soft contact lens is in inverted state and must be re-inverted prior to being packaged (assuming that there are no defects in the soft contact lens that would otherwise lead to a rejection of the soft contact lens).

Alternatively, the electronic scanning and evaluation unit may scan the electronic orthographic image of the contact lens or the at least one portion thereof sectionwise in radial direction, with the sections being radially oriented sections. By performing the scans in a radial direction the scans may follow the radial distribution of the linear structures of the pigments in an inverted soft contact lens. The radially oriented sections may again be of rectangular shape and, for example, they may have a size of three circumferential pixels (essentially circumferential, since they may not be absolutely circumferential) and five radial pixels (essentially radial since they may not be absolutely radial) on the CCD-sensor, respectively.

### BRIEF DESCRIPTION OF THE DRAWINGS

Further details and advantages of the invention will become apparent from the following description of exemplary embodiments of the invention with the aid of the drawings, in which:
Fig. 1a shows a cross-sectional view of a properly oriented (i.e. non-inverted) soft contact lens;
Fig. 1b shows a plan view of the non-inverted soft contact lens of Fig. 1a;
Fig. 2a shows a cross-sectional view of the soft contact lens of Fig. 1a, in inverted state;
Fig. 2b shows a plan view of the inverted soft contact lens of Fig. 2a;
Fig. 3 shows a view of a section of an orthographic image of the properly oriented soft contact lens of Fig. 1a;
Fig. 4 shows a view of a section of an orthographic image of the inverted contact lens of Fig. 2a;
Fig. 5 shows an embodiment of a contact lens inspection system according to the invention;
Fig. 6 shows some essential steps of an embodiment of the contact lens inspection method, for an inverted soft contact lens;
Fig. 7 shows some essential steps of an embodiment of the contact lens inspection method, for a non-inverted soft contact lens; and
Fig. 8 shows a bar chart showing the results of a soft contact lens inspection method according to the invention.

### DETAILED DESCRIPTION

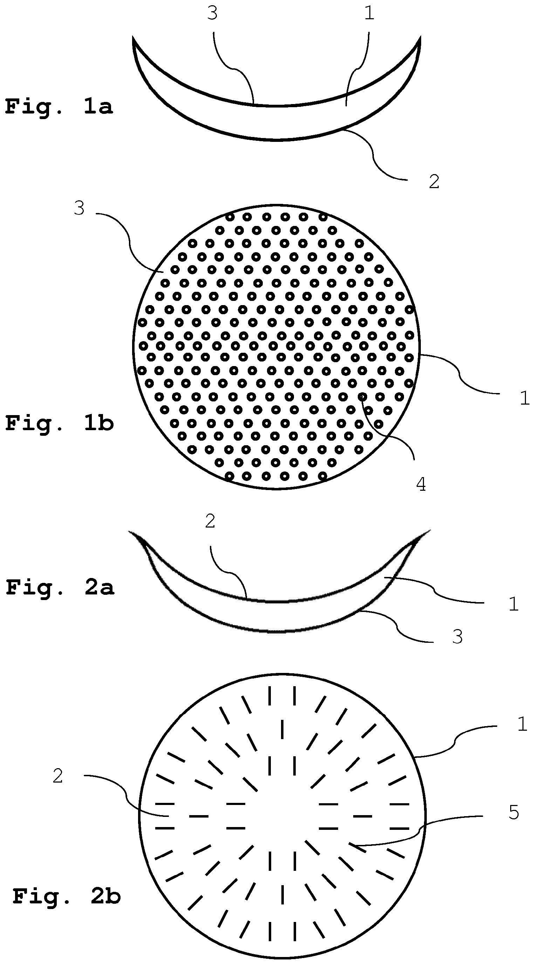

**Fig. 1a** shows a properly oriented (i.e. non-inverted) soft contact lens 1 with a correctly oriented front face 2 and rear face 3. In their proper orientation the front face 2 is convexly curved outwardly while the rear face 3 is concavely shaped. **Fig. 2a** shows the same soft contact lens 1 in inverted state (the inverted lens has been turned upside down in Fig. 2a so that the drawings of Fig. 1a and Fig. 2a look somehow similar), where the front face 2 is concavely curved, while the rear face 3 is convexly curved outwardly. The inverted contact lens 1 has a shape similar to that of a soup bowl.

**Fig. 1b** shows a plan view of the non-inverted soft contact lens 1 of Fig. 1a. Illuminated with collimated light having parallel light rays the fine-structure of the coloring pigments becomes visible. As is schematically shown in Fig. 1b the contact lens 1 shows a granular fine-structure 4 of the pigments. The granular structure 4 is more or less homogeneously distributed in contact lens 1. **Fig. 2b** shows a plan view of the inverted soft contact lens. As is schematically shown in Fig. 2b the fine-structure of the pigments exhibits radially oriented linear structures 5.

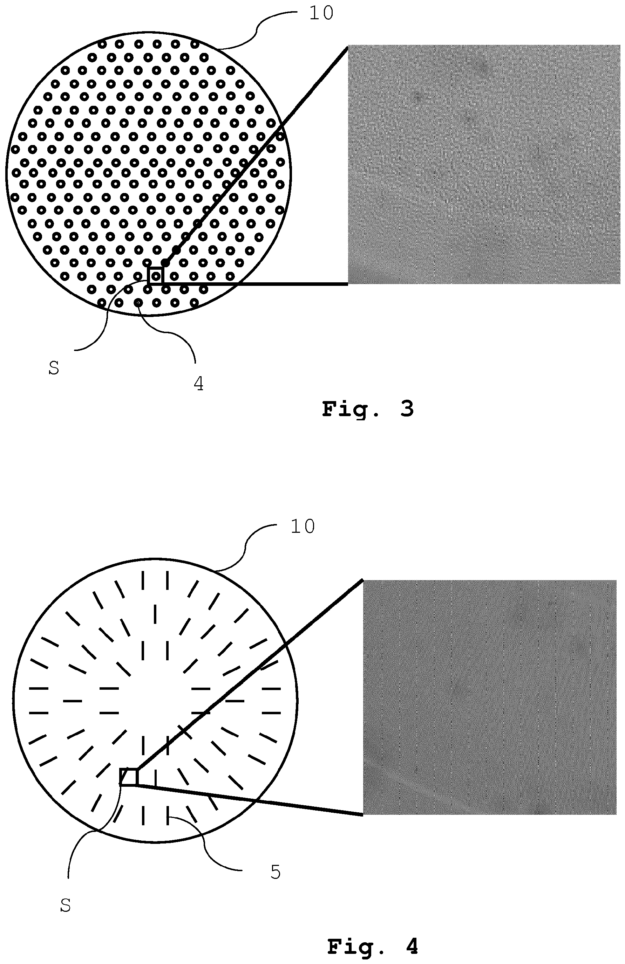

**Fig. 3** shows a view of a section of an orthographic image 10 of the non-inverted soft contact lens of Fig. 1b. The section is indicated by a rectangle S in the orthographic image 10 and shown in proper magnification on the right hand side of Fig. 3. The granular structure 4 of the coloring pigments and its homogeneous distribution across the depicted section S of the non-inverted soft contact lens 1 are clearly visible.

**Fig. 4** shows a view of a section of an orthographic image 10 of the inverted soft contact lens of Fig. 2b. The section is again indicated by a rectangle S in the orthographic image 10 and shown in proper magnification on the right hand side of Fig. 4. There is no more granular structure visible. Instead, the coloring pigments now show linear structures 5 which are radially oriented and nearly homogeneously distributed.

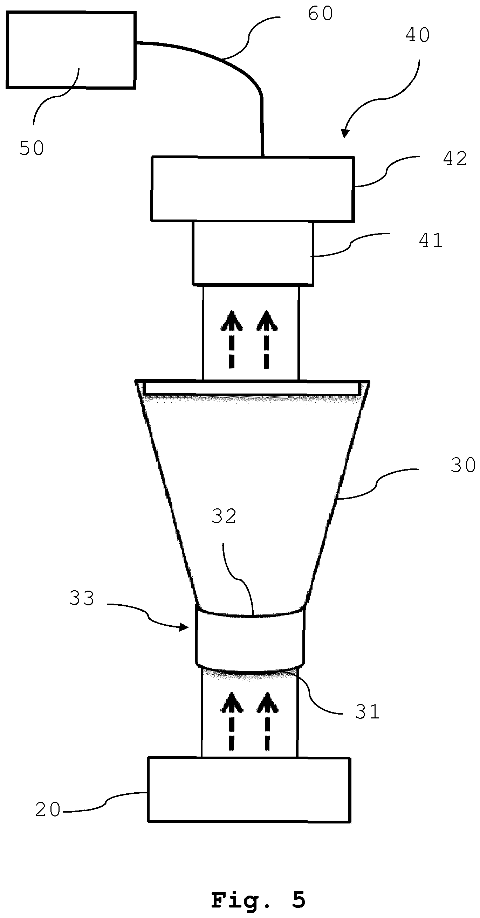

**Fig. 5** shows a schematic view of an embodiment of a contact lens inspection system according to the invention. The contact lens inspection system 100 comprises a light source 20 for illuminating a contact lens, in particular a soft contact lens 1, which is held in a container 30 in liquid, for example water. The light source 20 is arranged at a first longitudinal end of the container 30 near the container bottom 33, and illuminates the soft contact lens with collimated (parallel) light. Container bottom 33 is transparent to the collimated light impinging thereon, and in the embodiment has a slightly convex outer surface 31. The soft contact lens 1 may be supported inside the container 30 on a slightly concave inner surface 32 of container bottom 33, this concave inner surface 32 forming a support for the soft contact lens 1. The other longitudinal end of the container 30 can be either open, or may be provided with a lid which is transparent with respect to the collimated light impinging on the container 30. At that longitudinal end of the container 30 opposite to the end where the light source 20 is arranged, there is arranged a camera 40 comprising an objective lens 41 and an electronic sensor 42, for example a CCD-sensor or CMOS-sensor.

The objective lens 41 is capable of producing an orthographic image of the soft contact lens 1 contained in container 30 on the electronic sensor 42 which converts the orthographic image into an electronic orthographic image. In the embodiment shown, the objective lens 41 may comprise a telecentric lens. The telecentric lens for producing an orthographic image of the contact lens has its entrance pupil at infinity. Thus, irrespective of the position of the soft contact lens 1 within the container 30, the image of the soft contact lens 1 will have a constant magnification, thus producing an orthographic image which is then converted by the electronic sensor into an electronic orthographic image. The camera 40 is connected via a data line 60 with a scanning and evaluation unit 50. In the scanning and evaluation unit 50, either a portion of the electronic orthographic image of the soft contact lens 1 or the entire electronic orthographic image of the contact lens is electronically scanned, for example sequentially, in sections of a predetermined size, and either a line structure or a granular structure is detected within each section. The respective detected structures are counted, and the resulting total number of detected line structures or granular structures, respectively, is compared with a predetermined threshold value in order to determine whether or not the inspected soft contact lens 1 within said container is inverted. If the soft contact lens 1 is found to be inverted, action may be initiated to have the soft contact lens 1 re-inverted again to its proper (non-inverted) orientation prior to the soft contact lens 1 being placed in a package.

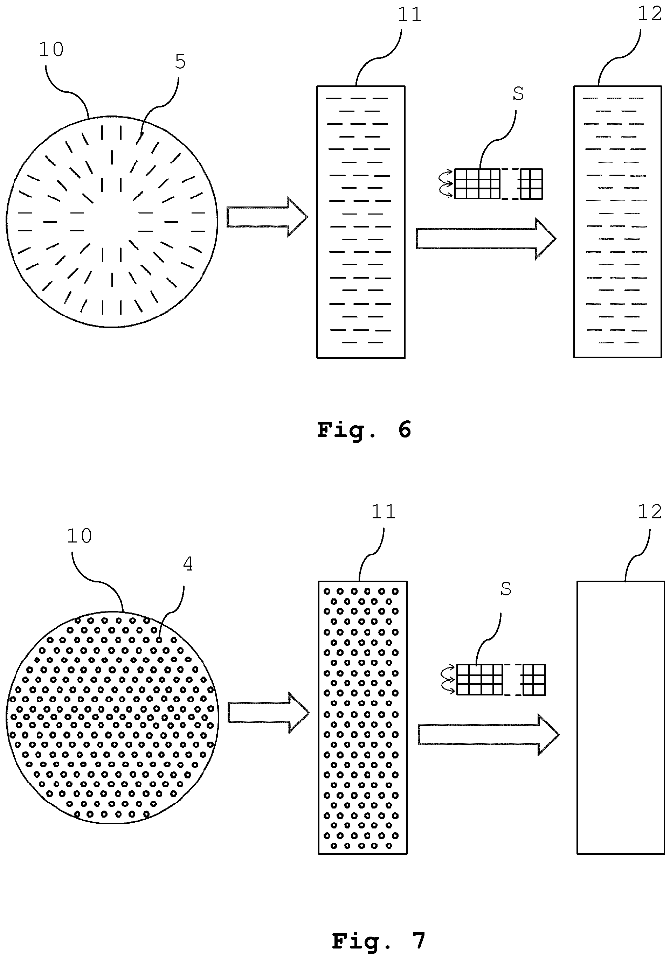

**Fig. 6** shows an embodiment of some essential steps of the contact lens inspection method according to the invention. After having produced an electronic orthographic image 10 of a soft contact lens, for example using the contact lens inspection system 100 of Fig. 5, the electronic orthographic image 10 is electronically scanned in sections. According to the illustrated embodiment, the electronic orthographic image 10 of the soft contact lens, which is in an inverted state here, may be electronically scanned sectionwise in a radial manner. The individual sections may be of rectangular shape, may be radially oriented and may have a size of, for example, three circumferential pixels and five radial pixels of the electronic sensor. Such section S is schematically indicated greatly enlarged in Fig. 6.

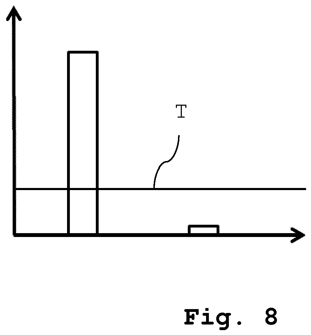

Generally the individual scanning sections may have a size of n circumferential lines times m radial columns, however, a section of three pixels times five pixels allows to reliably determine whether a line structure or a granular structure is present in the respective section, while keeping the computing expense low. For the sake of simplification, the electronic orthographic image 10 of the soft contact lens has been transformed into a rectangular image 11. By analyzing the rectangular image 11 sectionwise with the aid of the individual sections S, it can be determined whether in each individual section S there is a line structure or a granular structure. For example, if all or nearly all of the fields of the center row of the section S shown in Fig. 6 (which actually corresponds to the center row of the radially oriented section) are dark and all or nearly all of the fields of the neighboring rows (corresponding to the outer rows of the radially oriented section) are bright, a line structure 5 is detected. The total number of line structures 5 is then counted and compared to a threshold value T (see Fig. 8), and if the total number of line structures 5 exceeds the threshold value T the soft contact lens is found to be inverted. **Fig. 7** schematically illustrates the same steps for a soft contact lens in a proper non-inverted state. As is evident from Fig. 7, no line structures 5 are detected then but rather granular structures are detected. Since the steps correspond to those already explained in connection with Fig. 6, they are not reiterated here.

It is to be noted that while the electronic scanning of the electronic orthographic image or at least one portion thereof has been explained by way of example with radially oriented rectangular sections, the electronic orthographic image of the soft contact lens can also be electronically scanned sectionwise in horizontal or vertical direction, or both in horizontal and vertical direction. And although the line structures 5 are generally radially oriented in the soft contact lens and in the electronic orthographic image of the soft contact lens, a sufficient number of line structures are detected during horizontal or vertical scanning (or both) of the electronic orthographic image of the soft contact lens or of at least a portion of the electronic orthographic image of the soft contact lens.

**Fig. 8** is a bar chart in which the results of the total numbers of detected line structures in the electronic orthographic image of a soft contact lens (or in a portion of the electronic orthographic image of a soft contact lens) are graphically represented. The line T stands for a threshold value. The longer the bar on the left hand side of the chart the more line structures have been counted in the electronic orthographic image of the soft contact lens. Accordingly, the bar chart of Fig. 8 may represent the results of the counts of the line structures in the electronic orthographic image of the inverted soft contact lens as shown in Fig. 6. The short bar on the right hand side of the chart, ending below the threshold value, may be the result of the counts of the line structures in the electronic orthographic image of the properly oriented non-inverted soft contact lens as shown in Fig. 7. Thus, the bar on the left hand side in Fig. 8 represents the detection of an inverted soft contact lens, while the bar on the right hand side of Fig. 8 represents a properly oriented non-inverted soft contact lens. It is to be noted, that a soft contact lens with proper orientation may result in no line structures being detected at all. However, in some cases a soft contact lens may have other small but minor defects which may appear similar to a line structure. Therefore, the right hand bar of Fig. 8 is represented as having a small length.

Although the invention has been described with the aid of specific embodiments, it is evident to the person skilled in the art that this embodiment has been described by way of example only, but representing the general inventive concept, and that various changes and modifications can be made without departing from the technical teaching underlying the invention. Therefore, the invention is not intended to be limited by the embodiment described, but rather is defined by the appended claims.

## Claims

1. A contact lens inspection system (100), in particular for soft contact lenses (1), comprising:
a light source (20) for illuminating a contact lens to be inspected, said light source (20) being adapted to illuminate said contact lens with collimated light from a front side or the rear side of said contact lens;
a camera (40) having an objective lens (41) and an electronic sensor (42), said camera being arranged to produce an electronic orthographic image (10) of said contact lens on said electronic sensor (42), wherein said objective lens (41) has a diameter which is at least as large as a maximum diameter of said contact lens, and wherein said camera(40) is arranged on that side of said contact lens opposite to said side where said light source (20) is arranged;
an electronic scanning and evaluation unit (50) adapted for electronically scanning at least one portion of said electronic orthographic image of said contact lens on said electronic sensor (42) in sections (S) of a predetermined size to detect within each of said sections (S) of said electronic orthographic image of said contact lens a line structure (5), and further adapted for counting a total number of detected line structures (5) in said scanned at least one portion of said electronic orthographic image of said contact lens and for comparing said total number of detected line structures (5) with a predetermined threshold value (T) to determine whether or not said contact lens is inverted.

2. A contact lens inspection system according to claim 1, wherein said objective lens (41) comprises a telecentric lens.

3. A contact lens inspection system according to any one of claims 1 or 2, wherein said contact lens is arranged in a container (30) with its front side or its rear side facing towards one end of said container, and wherein said light source (20) is arranged on said one end of said container (30) while said camera (40) is arranged on another end of said container (30) opposite to said one end of said container (30).

4. A contact lens inspection system according to any one of the preceding claims, wherein said electronic scanning and evaluation unit (50) is adapted for electronically scanning said at least one portion of said electronic orthographic image of said contact lens in one of horizontal or vertical scans, or in both horizontal and vertical scans, and wherein said sections (S) are one of horizontal or vertical sections, or both horizontal and vertical sections.

5. A contact lens inspection system according to claim 4, wherein each of said horizontal or vertical sections (S) is of rectangular shape, and wherein said horizontal section (S) has a size of five horizontal pixels and three vertical pixels, of said electronic sensor (42), and wherein said vertical section (S) has a size of three horizontal pixels and five vertical pixels of said electronic sensor (42).

6. A contact lens inspection system according to any one of claims 1 to 3, wherein said electronic scanning and evaluation unit is adapted for electronically scanning said at least one portion of said electronic orthographic image of said contact lens in radially directed scans, and wherein said sections (S) are radially oriented sections.

7. A contact lens inspection system according to claim 6, wherein each of said radially oriented sections (S) is of rectangular shape and has a size of three circumferential pixels and five radial pixels of said electronic sensor (42).

8. A method for inspecting a contact lens, in particular a soft contact lens (1), said method comprising:
illuminating a contact lens to be inspected with collimated light from one of a front side or a rear side of said contact lens;
producing an electronic orthographic image (10,) of said illuminated contact lens on a side opposite to said side from which said contact lens is illuminated;
electronically scanning said electronic orthographic image (10) of said contact lens in at least one portion in sections (S) of a predetermined size and detecting within each of said sections a line structure (5);
counting a total number of detected line structures (5) in said at least one portion of said scanned electronic orthographic image of said contact lens and comparing said counted total number of line structures with a predetermined threshold value (T) to determine whether or not said contact lens is inverted.

9. A method according to claim 8, wherein illuminating said contact lens with collimated light is performed using a light source (20) which is arranged on one side of said front and rear sides of said contact lens, and wherein producing said electronic orthographic image of said illuminated contact lens is performed using a camera (40) arranged on said other side of said front side and said rear side of said contact lens, said camera (40) having an objective lens (41) and an electronic sensor (42), wherein said objective lens (41) has a diameter which is at least as large as the maximum diameter of said contact lens.

10. A method according to claim 9, wherein an objective lens (41) is used comprising a telecentric lens.

11. A method according to any one of claims 8 to 10, wherein electronically scanning said at least one portion of said electronic orthographic image (10) of said contact lens in said sections (S) is performed in one of horizontal or vertical scans, or is performed both in horizontal and vertical scans, and wherein said sections (S) are one of horizontal sections or vertical sections or both, horizontal and vertical sections.

12. A method according to claim 11, wherein each of said horizontal or vertical sections (S) is of rectangular shape, and wherein said horizontal section (S) has a size of five horizontal pixels and three vertical pixels of said electronic sensor (42), and wherein said vertical section (S) has a size of three horizontal pixels and five vertical pixels of said electronic sensor (42).

13. A method according to any one of claims 8 to 10, wherein electronically scanning said electronic orthographic image (10) of said contact lens in said sections (S) is performed in a radial direction, and wherein said sections (S) are radially oriented sections.

14. The method of claim 13, wherein said radially oriented section (S) is of rectangular shape and has a size of three circumferential pixels and five radial pixels of said electronic sensor (42).

## Patentansprüche

1. Kontaktlinseninspektionssystem (100), insbesondere für weiche Kontaktlinsen (1), das Folgendes umfasst:
eine Lichtquelle (20) zum Beleuchten einer zu inspizierenden Kontaktlinse, wobei die Lichtquelle (20) dazu ausgebildet ist die Kontaktlinse mit kollimiertem Licht von einer Vorderseite oder der Rückseite der Kontaktlinse zu beleuchten;
eine Kamera (40) mit einer Objektivlinse (41) und einem elektronischen Sensor (42), wobei die Kamera zum Produzieren eines elektronischen orthografischen Bildes (10) der Kontaktlinse auf dem elektronischen Sensor (42) ausgebildet ist, wobei die Objektivlinse (41) einen Durchmesser aufweist, der mindestens so gross ist wie ein Maximaldurchmesser der Kontaktlinse, und wobei die Kamera (40) auf derjenigen Seite der Kontaktlinse angeordnet ist, die der Seite gegenüberliegt, auf der die Lichtquelle (20) angeordnet ist;
eine elektronische Scan-und-Auswertungs-Einheit (50), die ausgebildet ist zum elektronischen Scannen wenigstens eines Teils des elektronischen orthografischen Bildes der Kontaktlinse auf dem elektronischen Sensor (42) in Abschnitten (S) einer vorbestimmten Grösse, um innerhalb von jedem der Abschnitte (S) des elektronischen orthografischen Bildes der Kontaktlinse eine Linienstruktur (5) zu detektieren, und ferner ausgebildet ist zum Zählen einer Gesamtzahl der detektierten Linienstrukturen (5) in dem gescannten wenigstens einen Teil des elektronischen orthografischen Bildes der Kontaktlinse sowie zum Vergleichen der Gesamtzahl der detektierten Linienstrukturen (5) mit einem vorbestimmten Schwellenwert (T), um zu bestimmen, ob die Kontaktlinse invertiert ist oder nicht.

2. Kontaktlinseninspektionssystem nach Anspruch 1, wobei die Objektivlinse (41) eine telezentrische Linse umfasst.

3. Kontaktlinseninspektionssystem nach einem der Ansprüche 1 oder 2, wobei die Kontaktlinse in einem Behälter (30) angeordnet ist, wobei ihre Vorderseite oder ihre Rückseite einem Ende des Behälters zugewandt ist, und wobei die Lichtquelle (20) auf dem einen Ende des Behälters (30) angeordnet ist, während die Kamera (40) auf einem anderen Ende des Behälters (30) angeordnet ist, der dem einen Ende des Behälters (30) gegenüberliegt.

4. Kontaktlinseninspektionssystem nach einem der vorhergehenden Ansprüche, wobei die elektronische Scan-und Auswertungs-Einheit (50) ausgebildet ist zum elektronischen Scannen des wenigstens einen Teils des elektronischen orthografischen Bildes der Kontaktlinse in horizontalen Scans oder vertikalen Scans oder sowohl in horizontalen als auch vertikalen Scans, und wobei die Abschnitte (S) horizontale oder vertikale Abschnitte oder sowohl horizontale als auch vertikale Abschnitte sind.

5. Kontaktlinseninspektionssystem nach Anspruch 4, wobei jeder der horizontalen oder vertikalen Abschnitte (S) von rechteckiger Form ist und wobei der horizontale Abschnitt (S) eine Grösse von fünf horizontalen Pixeln und drei vertikalen Pixeln des elektronischen Sensors (42) aufweist, und wobei der vertikale Abschnitt (S) eine Grösse von drei horizontalen Pixeln und fünf vertikalen Pixeln des elektronischen Sensors (42) aufweist.

6. Kontaktlinseninspektionssystem nach einem der Ansprüche 1 bis 3, wobei die elektronische Scan-und-Auswertungs-Einheit ausgebildet ist zum elektronischen Scannen des wenigstens einen Teils des elektronischen orthografischen Bildes der Kontaktlinse in radial gerichteten Scans, und wobei die Abschnitte (S) radial orientierte Abschnitte sind.

7. Kontaktlinseninspektionssystem nach Anspruch 6, wobei jeder der radial orientierten Abschnitte (S) von rechteckiger Form ist und eine Grösse von drei Umfangspixeln und fünf radialen Pixeln des elektronischen Sensors (42) aufweist.

8. Verfahren zum Inspizieren einer Kontaktlinse, insbesondere einer weichen Kontaktlinse (1), wobei das Verfahren Folgendes umfasst:
Beleuchten einer zu inspizierenden Kontaktlinse mit kollimiertem Licht von einer Vorderseite oder einer Rückseite der Kontaktlinse;
Produzieren eines elektronischen orthografischen Bildes (10) der Kontaktlinse auf einer Seite, die der Seite gegenüberliegt, von der her die Kontaktlinse beleuchtet wird;
elektronisches Scannen des elektronischen orthografischen Bildes (10) der Kontaktlinse in wenigstens einem Abschnitt (S) einer vorbestimmten Grösse, und Detektieren einer Linienstruktur (5) innerhalb jedes der Abschnitte;
Zählen einer Gesamtzahl der detektierten Linienstrukturen (5) in dem wenigstens einen Teil des gescannten elektronischen orthografischen Bildes der Kontaktlinse, und Vergleichen der gezählten Gesamtzahl an Linienstrukturen mit einem vorbestimmten Schwellenwert (T), um zu bestimmen, ob die Kontaktlinse invertiert ist oder nicht.

9. Verfahren nach Anspruch 8, wobei Beleuchten der Kontaktlinse mit kollimiertem Licht unter Verwendung einer Lichtquelle (20) durchgeführt wird, die auf einer Seite der Vorderseite und der Rückseite der Kontaktlinse angeordnet ist, und wobei Produzieren des elektronischen orthografischen Bildes der Kontaktlinse unter Verwendung einer Kamera (40) durchgeführt wird, die auf der anderen Seite der Vorderseite und der Rückseite der Kontaktlinse angeordnet ist, wobei die Kamera (40) eine Objektivlinse (41) und einen elektronischen Sensor (42) aufweist, wobei die Objektivlinse (41) einen Durchmesser aufweist, der mindestens so gross ist wie ein Maximaldurchmesser der Kontaktlinse.

10. Verfahren nach Anspruch 9, wobei eine Objektivlinse (41) verwendet wird, die eine telezentrische Linse umfasst.

11. Verfahren nach einem der Ansprüche 8 bis 10, wobei das elektronische Scannen des wenigstens einen Teils des elektronischen orthografischen Bildes (10) der Kontaktlinse in den Abschnitten (S) in horizontalen oder vertikalen Scans durchgeführt wird, oder sowohl in horizontalen als auch vertikalen Scans durchgeführt wird, und wobei die Abschnitte (S) horizontale Abschnitte oder vertikale Abschnitte, oder sowohl horizontale als auch vertikale Abschnitte sind.

12. Verfahren nach Anspruch 11, wobei jeder der horizontalen oder vertikalen Abschnitte (S) von rechteckiger Form ist, und wobei der horizontale Abschnitt (S) eine Grösse von fünf horizontalen Pixeln und drei vertikalen Pixeln des elektronischen Sensors (42) aufweist, und wobei der vertikale Abschnitt (S) eine Grösse von drei horizontalen Pixeln und fünf vertikalen Pixeln des elektronischen Sensors (42) aufweist.

13. Verfahren nach einem der Ansprüche 8 bis 10, wobei das elektronische Scannen des elektronischen orthografischen Bildes (10) der Kontaktlinse in Abschnitten (S) in einer radialen Richtung durchgeführt wird, und wobei die Abschnitte (S) radial orientierte Abschnitte sind.

14. Verfahren nach Anspruch 13, wobei der radial orientierte Abschnitt (S) von rechteckiger Form ist und eine Grösse von drei Umfangspixeln und fünf radialen Pixeln des elektronischen Sensors (42) aufweist.

## Revendications

1. Système d'inspection de lentilles de contact (100), en particulier pour lentilles de contact souple (1), comprenant :
une source de lumière (20) destinée à éclairer une lentille de contact devant être inspectée, ladite source de lumière (20) étant adaptée pour éclairer ladite lentille de contact avec de la lumière collimatée depuis un côté avant ou le côté arrière de ladite lentille de contact ;
une caméra (40) ayant un objectif (41) et un capteur électronique (42), ladite caméra étant agencée pour produire une image orthographique électronique (10) de ladite lentille de contact sur ledit capteur électronique (42), ledit objectif (41) ayant un diamètre qui est au moins aussi grand qu'un diamètre maximal de ladite lentille de contact, et ladite caméra (40) étant agencée sur le côté de ladite lentille de contact à l'opposé dudit côté où ladite source de lumière (20) est agencée ;
une unité de balayage électronique et d'évaluation (50) adaptée pour balayer électroniquement au moins une partie de ladite image orthographique électronique de ladite lentille de contact sur ledit capteur électronique (42) en sections (S) d'une taille prédéterminée pour détecter à l'intérieur de chacune desdites sections (S) de ladite image orthographique électronique de ladite lentille de contact une structure de lignes (5), et également adaptée pour compter un nombre total de structures de lignes détectées (5) dans ladite au moins une partie balayée de ladite image orthographique électronique de ladite lentille de contact et pour comparer ledit nombre total de structures de lignes détectées (5) avec une valeur seuil prédéterminée (T) pour déterminer si ladite lentille de contact est inversée ou non.

2. Système d'inspection de lentilles de contact selon la revendication 1, dans lequel ledit objectif (41) comprend une lentille télécentrique.

3. Système d'inspection de lentilles de contact selon l'une quelconque des revendications 1 et 2, dans lequel ladite lentille de contact est agencée dans un récipient (30) avec son côté avant ou son côté arrière tourné vers une extrémité donnée dudit récipient, et dans lequel ladite source de lumière (20) est agencée sur ladite extrémité donnée dudit récipient (30) tandis que ledit appareil-photo (40) est agencé sur une autre extrémité dudit récipient (30) à l'opposé de ladite extrémité donnée dudit récipient (30).

4. Système d'inspection de lentilles de contact selon l'une quelconque des revendications précédentes, dans lequel ladite unité de balayage électronique et d'évaluation (50) est adaptée pour balayer électroniquement ladite au moins une partie de ladite image orthographique électronique de ladite lentille de contact en balayages horizontaux ou verticaux, ou à la fois en balayages horizontaux et verticaux, et dans lequel lesdites sections (S) sont des sections horizontales ou verticales, ou à la fois des sections horizontales et verticales.

5. Système d'inspection de lentilles de contact selon la revendication 4, dans lequel chacune desdites sections horizontales ou verticales (S) est de forme rectangulaire, et dans lequel ladite section horizontale (S) a une taille de cinq pixels horizontaux et trois pixels verticaux dudit capteur électronique (42), et dans lequel ladite section verticale (S) a une taille de trois pixels horizontaux et cinq pixels verticaux dudit capteur électronique (42).

6. Système d'inspection de lentilles de contact selon l'une quelconque des revendications 1 à 3, dans lequel ladite unité de balayage électronique et d'évaluation est adaptée pour balayer électroniquement ladite au moins une partie de ladite image orthographique électronique de ladite lentille de contact en balayages dirigés radialement, et dans lequel lesdites sections (S) sont des sections orientées radialement.

7. Système d'inspection de lentilles de contact selon la revendication 6, dans lequel chacune desdites sections orientées radialement (S) est de forme rectangulaire et a une taille de trois pixels circonférentiels et cinq pixels radiaux dudit capteur électroniques (42).

8. Procédé d'inspection d'une lentille de contact, en particulier d'une lentille de contact souple (1), ledit procédé comprenant :
l'éclairage d'une lentille de contact devant être inspectée avec de la lumière collimatée depuis un côté avant ou un côté arrière de ladite lentille de contact ;
la production d'une image orthographique électronique (10) de ladite lentille de contact éclairée sur un côté opposé audit côté depuis lequel ladite lentille de contact est éclairée ;
le balayage électronique de ladite image orthographique électronique (10) de ladite lentille de contact dans au moins une partie en sections (S) d'une taille prédéterminée et la détection à l'intérieur de chacune desdites sections d'une structure de lignes (5) ;
le comptage d'un nombre total de structures de lignes détectées (5) dans ladite au moins une partie de ladite image orthographique électronique balayée de ladite lentille de contact et la comparaison dudit nombre total compté de structures de lignes avec une valeur seuil prédéterminée (T) pour déterminer si ladite lentille de contact est inversée ou non.

9. Procédé selon la revendication 8, dans lequel l'éclairage de ladite lentille de contact avec de la lumière collimatée est effectué au moyen d'une source de lumière (20) qui est agencée sur un côté parmi lesdits côtés avant et arrière de ladite lentille de contact, et dans lequel la production de ladite image orthographique électronique de ladite lentille de contact éclairée est effectuée au moyen d'une caméra (40) agencée sur ledit autre côté parmi ledit côté avant et ledit côté arrière de ladite lentille de contact, ladite caméra (40) ayant un objectif (41) et un capteur électronique (42), ledit objectif (41) ayant un diamètre qui est au moins aussi grand que le diamètre maximal de ladite lentille de contact.

10. Procédé selon la revendication 9, dans lequel est utilisé un objectif (41) comprenant une lentille télécentrique.

11. Procédé selon l'une quelconque des revendications 8 à 10, dans lequel le balayage électronique de ladite au moins une partie de ladite image orthographique électronique (10) de ladite lentille de contact dans lesdites sections (S) est effectué en balayages horizontaux ou verticaux, ou est effectué à la fois en balayages horizontaux et verticaux, et dans lequel lesdites sections (S) sont des sections horizontales ou des sections verticales ou à la fois des sections horizontales et verticales.

12. Procédé selon la revendication 11, dans lequel chacune desdites sections horizontales ou verticales (S) est de forme rectangulaire, et dans lequel ladite section horizontale (S) a une taille de cinq pixels horizontaux et trois pixels verticaux dudit capteur électronique (42), et dans lequel ladite section verticale (S) a une taille de trois pixels horizontaux et cinq pixels verticaux dudit capteur électronique (42) .

13. Procédé selon l'une quelconque des revendications 8 à 10, dans lequel le balayage électronique de ladite image orthographique électronique (10) de ladite lentille de contact dans lesdites sections (S) est effectué dans une direction radiale, et dans lequel lesdites sections (S) sont des sections orientées radialement.

14. Procédé de la revendication 13, dans lequel ladite section orientée radialement (S) est de forme rectangulaire et a une taille de trois pixels circonférentiels et cinq pixels radiaux dudit capteur électronique (42).
